Europäisches Patentamt

European Patent Office

Office européen des brevets

(11) Veröffentlichungsnummer: **0 210 506 B1**

# EUROPÄISCHE PATENTSCHRIFT

(45) Veröffentlichungstag der Patentschrift: **19.11.92**

(21) Anmeldenummer: **86109541.2**

(22) Anmeldetag: **11.07.86**

(51) Int. Cl.⁵: **H04L 25/08**, H04L 25/26

---

(54) **Sende-/Empfangsanordnung.**

---

(30) Priorität: **20.07.85 DE 3525973**

(43) Veröffentlichungstag der Anmeldung:
**04.02.87 Patentblatt 87/06**

(45) Bekanntmachung des Hinweises auf die
Patenterteilung:
**19.11.92 Patentblatt 92/47**

(84) Benannte Vertragsstaaten:
**AT BE CH DE FR IT LI NL SE**

(56) Entgegenhaltungen:
DE-A- 2 314 116
FR-A- 2 363 240

**OPTOELECTRONICS/FIBER-OPTICS APPLICA-
TIONS MANUAL, 1981, 2. Auflage, Teil 3,
"Optoisolators", Seiten 3.56-3.64, Absatz
3.6.3, "Data Rate Enhancement", Hewlett
Packard, Palo Alto, US**

**PATENT ABSTRACTS OF JAPAN, Band 9, Nr.
102 (E-312)[1825], 4. Mai 1985 & JP-A-59 228
450**

**PATENT ABSTRACTS OF JAPAN, Band 6, Nr.
222 (E-140)[1100], 6. November 1982 & JP-
A-57 125 553**

(73) Patentinhaber: **Alcatel SEL Aktiengesellschaft
Lorenzstrasse 10
W-7000 Stuttgart 40(DE)**

(84) Benannte Vertragsstaaten:
**BE DE FR NL SE**

(73) Patentinhaber: **ALCATEL N.V.
Strawinskylaan 537 (World Trade Center)
NL-1077 XX Amsterdam(NL)**

(84) Benannte Vertragsstaaten:
**CH IT LI AT**

(72) Erfinder: **Dunger, Hartmut
Hirschstrasse 34
W-7254 Hemmingen(DE)**

(74) Vertreter: **Villinger, Bernhard, Dipl.-Ing. et al
Alcatel SEL AG Patent- und Lizenzwesen
Postfach 30 09 29
W-7000 Stuttgart 30(DE)**

**Beschreibung**

Die Erfindung betrifft eine Schaltungsanordnung zum Übertragen von digitalen Signalen über eine symmetrische, zweiadrige Leitung, die an einem Ende mit einer eine erste und eine zweite Stromquelle enthaltenden Sendeeinheit und an dem anderen Ende mit einer eine Auswerteschaltung enthaltende Empfangseinheit abgeschlossen ist.

Eine mit drei logischen Zuständen arbeitende Sende-/Empfangsschaltung ist aus der französischen Patentschrift FR-A-2,363,240 zu entnehmen. Zum übertragen von digitalen Signalen über eine symmetrische Leitung ist eine Sendeeinheit mit zwei Stromquellen und eine Empfangseinheit mit zwei als Komparatoren arbeitenden Operationsverstärker vorgesehen. Zum Steuern der Übertragung der Daten wird ein dritter logischer Zustand, d.h. ein Bit erzeugt, welches im nicht sendenden Zustand der beiden Stromquellen erhalten und auf der Empfängerseite mittels eines logischen UND-Gliedes detektiert wird.

Es ist bereits eine Schaltungsanordnung bekannt, die eine digitale Signalübertragung über eine Twisted-Pair-Leitung ermöglicht. Dazu wird als Sendeeinheit ein Inverter mit Komplementärausgängen und als Empfangseinheit ein Komparator verwendet, der die an einem zwischen die beiden Adern der Leitung geschalteten Widerstand abfallende Spannung zur Auswertung benutzt. Diese Schaltungsanordnung funktioniert jedoch nur dann, wenn ihr Gleichtakt-Aussteuerungsbereich nicht überschritten wird. Weiterhin kann in der Empfangseinheit auch ein Optokoppler eingesetzt werden (U.Tietze, Ch.Schenk, Halbleiter-Schaltungstechnik, 4. Auflage, Seiten 598-600, Kapitel 23.1 "Verbindungsleitungen").

Bei der Übertragung digitaler Signale, insbesondere über Leitungen großer Länge, treten aufgrund der ohmschen und kapazitiven Komponenten der Leitung verzerrte Schaltflanken beim Übergang von einem logischen Zustand, "Low"- oder L-Zustand, zum anderen logischen Zustand, "High"- oder H-Zustand, auf. Dadurch kann die Dauer eines H-Zustandes sich von der Dauer eines L-Zustandes unterscheiden, so daß das Puls-Pause-Verhältnis erheblich von dem erstrebten 1:1 Verhältnis abweicht.

Die technische Aufgabe nach der Erfindung besteht darin, eine Übertragung digitaler Signale über eine symmetrische, zweiadrige Leitung, insbesondere großer Leitungslänge, mit kontrollierbarem Puls-Pause-Verhältnis zu realisieren.

Eine Lösung dieser Aufgabe erfolgt mit den in Anspruch 1 angegebenen Mitteln.

Weitere vorteilhafte Ausgestaltungen des Gegenstandes der Erfindung sind den Unteransprüchen zu entnehmen.

Ein Ausführungsbeispiel wird im folgenden anhand der Zeichnungen erläutert. Es zeigen:

Figur 1     ein Blockschaltbild der erfindungsgemäßen Schaltungsanordnung und

Figur 2     eine weitere Empfangseinheit gemäß der Erfindung.

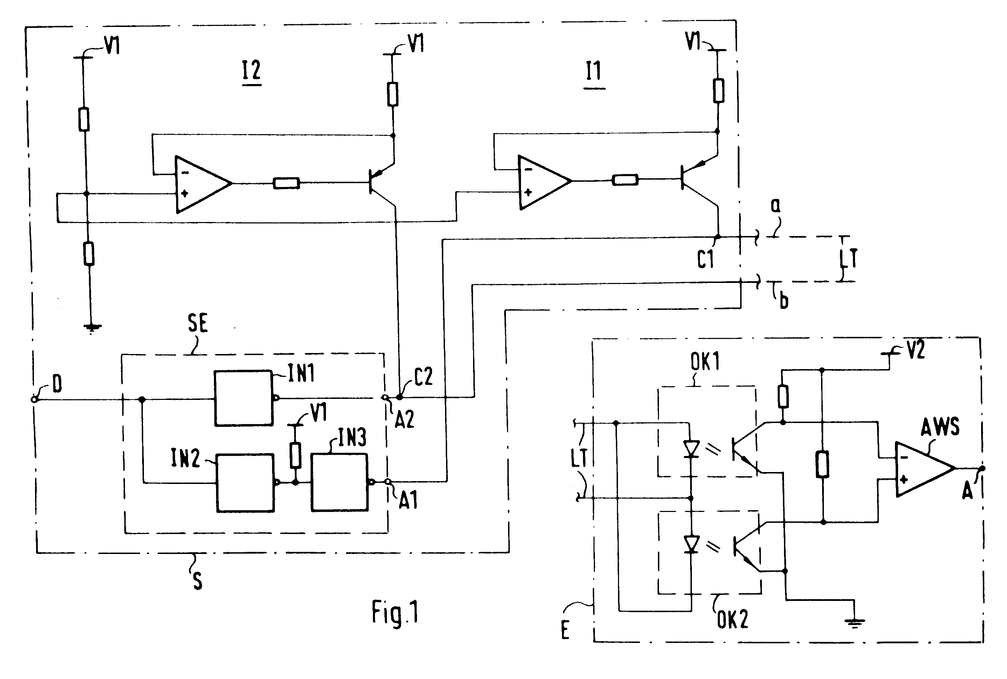

Eine symmetrische, zweiadrige Leitung LT ist, wie in Figur 1 dargestellt, an einem Ende mit einer Sendeeinheit S und an ihrem anderen Ende mit einer Empfangseinheit E abgeschlossen.

Die Sendeeinheit S weist eine erste Konstantstromquelle I1, eine zweite Konstantstromquelle I2 und eine Schalteinheit SE auf.

Die Konstantstromquelle I1, I2 enthalten eine übliche Transistorschaltung, die mit einer ersten Versorgungsspannung V1 verbunden ist. Die Einstellung des gewünschten konstanten Stromes erfolgt über eine die Emitter-Basis-Strecke des Transistors regelnde, übliche Operationsverstärkerschaltung. Beide Konstantstromquellen I1, I2 sind identisch aufgebaut und liefern foglich den gleichen konstanten Strom.

Die erste Konstantstromquelle I1 ist an einen Abgriff C1 einer ersten Ader a der Leitung LT und die zweite Konstantstromquelle I2 ist an einen Abgriff C2 einer zweiten Ader b der Leitung LT angeschlossen, wobei ein erster Ausgang A1 der Schalteinheit SE mit dem ersten Abgriff C1 und ein zweiter Ausgang A2 der Schalteinheit SE mit dem zweiten Abgriff C2 verbunden sind.

Die Schalteinheit SE weist ein erstes Invertierglied IN1, ein zweites Invertierglied IN2 und ein in Reihe zum zweiten Invertierglied IN2 geschaltetes drittes Invertierglied IN3 auf. Es handelt sich dabei um logische Gatter mit offenen Kollektor-Ausgängen, von denen das zweite Invertierglied IN2 direkt über einen Kollektorwiderstand mit der ersten Versorgungsspannung V1 verbunden ist.

Ein Signaleingang D der Schalteinheit SE ist parallel an einem Eingang des ersten IN1 und des zweiten Invertiergliedes IN2 geführt. Ein Ausgang des ersten Invertiergliedes IN1 ist mit dem zweiten Ausgang A2 der Schalteinheit SE und ein Ausgang des dritten Invertiergliedes IN3 ist mit dem ersten Ausgang A1 der Schalteinheit SE verbunden.

Die Empfangseinheit E weist einen ersten Optokoppler OK1, einen zweiten Optokoppler OK2 und eine Auswerteschaltung AWS auf. Dabei wird für die Dauer eines ersten logischen Zustandes, der im folgenden "HIGH"- oder H-Zustand genannt wird, des übertragenen, digitalen Signales die Leitung LT mit der Primärseite, d.h. mit einer im Durchlaßrichtung gepolten lichtemitterenden Diode des ersten Optokopplers OK1 und für die Dauer eines zweiten logischen Zustandes, der im folgenden "LOW"- oder L-Zustand genannt wird, die Leitung LT mit der Primärseite d.h. mit einer in Durchlaßrichtung gepolten lichtemittierenden Diode des zweiten Optokopplers OK2 abgeschlossen. Die lichtemittierenden Dioden der beiden Optokoppler OK1, OK2 sind so geschaltet, daß für die Dauer eines H-Zustandes die Diode des ersten Optokopplers OK1 in Durchlaßrichtung und die Diode des zweiten Optokopplers OK2 in Sperrichtung arbeiten und daß für die Dauer eines L-Zustandes entsprechend die Diode des ersten Optokopplers OK1 in Sperrichtung und die Diode des zweiten Optokopplers OK2 in Durchlaßrichtung betrieben werden. Weiterhin sind die Sekundärseiten der Optokoppler OK1, OK2 mit der Auswerteschaltung AWS verbunden, an deren Ausgang A die übertragenen digitalen Signale anliegen. Dabei bilden Phototransistoren die Sekundärseiten der Optokoppler OK1, OK2. Die Auswerteschaltung AWS weist einen als Komparator beschalteten Operationsverstärker auf, dessen Ausgang den Ausgang A der Auswerteschaltung bildet. Der Kollektor des Phototransistors des ersten Optokopplers OK1 ist mit dem invertierenden Eingang - des Operationsverstärkers und über eine Widerstand mit einer zweiten Versorgungsspannung V2 verbunden. Entsprechend ist der Kollektor des Phototransistors des zweiten Optokopplers OK2 mit dem nicht invertierenden Eingang + des Operationsverstärkers und über einen gleichgroßen Widerstand mit der zweiten Versorgungsspannung V2 verbunden. Ferner sind die Emitter der Phototransistors des ersten OK1 und des zweiten Optokopplers OK2 an Nullpotential geführt.

Zur Erläuterung der erfindungsgemäßen Übertragungsanordnung wird zunächst ein an dem Signaleingang D der Schalteinheit SE anliegender L-Zustand angenommen.

Ein auftretender Wechsel am Signaleinang D vom L-Zustand in den H-Zustand bewirkt nun, daß am Ausgang des ersten Invertiergliedes IN1 ein L-Zustand vorliegt, d.h. der Ausgang des ersten Invertiergliedes IN1 ist gegen ein Nullpotential durchgeschaltet. Somit fließt der Strom der an dem Abgriff C2 der zweiten Ader b der Leitung LT angeschlossenen zweiten Konstantstromquelle I2 über das gegen Nullpotential durchgeschaltete erste Invertierglied IN1 ab.

Gleichzeitig bewirkt der Wechsel in den H-Zustand am Eingang des zweiten Invertiergliedes IN2, daß der Ausgang des in Reihe geschalteten dritten Invertiergliedes IN3 sich im H-Zustand befindet, d.h. gegen Nullpotential gesperrt ist.

Der konstante Strom der an dem Abgriff C1 der ersten Ader a angeschlossenen ersten Konstantstromquelle I1 muß dadurch über die erste Ader a zur Primärseite, d.h. über die in Durchlaßrichtung gepolte lichtemittierende Diode des ersten Optokopplers OK1 in der Empfangseinheit E und so dann über die zweite Ader b zurück zum ersten Invertierglied IN1 und damit gegen Nullpotential abfließen. Für die Dauer des am Signaleingang D anliegenden H-Zustandes ist der Phototransistor des ersten Optokopplers OK1 gegen Nullpotential durchgeschaltet, d.h. Nullpotential am invertierenden Eingang - des Operationsverstärkers Gleichzeitig sperrt der Phototransistor des zweiten Optokopplers OK2, so daß die zweite Versorgungsspannung V2 am nicht invertierenden Eingang + des Operationsverstärkers anliegt. Der Ausgang des als Komparator geschalteten Operationsverstärkers befindet sich für die Dauer eines H-Zustandes am Signaleingang D ebenfalls im H-Zustand.

Ein Wechsel am Eingang D vom H-Zustand zum L-Zustand bewirkt entsprechend ein Umladen der Leitung LT, da jetzt der Strom der ersten Konstantstromquelle I1 über das gegen Nullpotential durchgeschaltete dritte Invertierglied IN3 abfließt. Gleichzeitig fließt der Strom der zweiten Konstantstromquelle I2 über die zweite Ader b - erstes Invertierglied IN1 ist jetzt gegen Nullpotential gesperrt - zur Primärseite des zweiten Optokopplers OK2, d.h. über die in Durchlaßrichtung geschaltete Diode, und so dann über die erste Ader a zurück zum dritten Invertierglied IN3 und somit gegen Nullpotential ab.

Für die Dauer des am Signaleingang D anliegenden L-Zustandes ist jetzt der Phototransistor des zweiten Optokopplers OK2 gegen Nullpotential durchgeschaltet, d.h. Nullpotential am nichtinvertierenden Eingang + des Operationsverstärkers der Auswerteschaltung AWS. Da gleichzeitig der Phototransistor des ersten Optokopplers OK1 gesperrt ist, liegt jetzt die zweite Versorgungsspannung V2 am invertierenden Eingang - des Operationsverstärkers an, so daß sich am Ausgang A für die Dauer eines L-Zustandes am Signaleingang D, ebenfalls ein L-Zustand einstellt.

Durch die erfindungsgemäße Schaltungsanordnung erfolgt ein definiertes Umladen der Leitung LT mit jeweils dem gleichen konstanten Strom, so daß unabhängig von den Leitungsparametern sowie unabhängig von der Länge der Leitung LT (da von der Leitung jeweils identisch beeinflußt) jeweils die gleichen Schaltflanken bei einem Zustandswechsel an den Primärseiten der Optokoppler OK1, OK2 realisiert werden. Die Optokoppler OK1, OK2 ermöglichen somit unabhängig von Leitungsparametern und anderen Leitungseinflüssen das gleiche und damit ein kontrollierbares Puls-Pause-Verhältnis bei der erfindungsgemäßen Übertragung eines digitalen Signals.

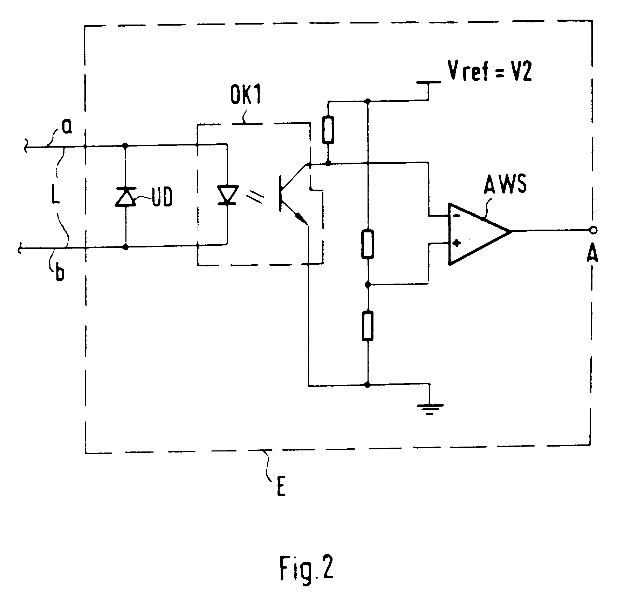

In einer weiteren Ausgestaltung der Erfindung, wie in Figur 2 gezeigt, wird in der Empfangseinheit E anstelle des zweiten Optokopplers OK2 eine Umwegdiode UD antiparallel zur Primärseite des ersten Optokopplers OK1, d.h. zur lichtemittierenden Diode des ersten Optokopplers OK1 geschaltet. Die Sekundärseite des ersten Optokopplers OK1 ist, wie zuvor beschrieben, mit der Auswerteschaltung AWS verbunden. Zur Auswertung ist jetzt eine Referenzspannungsquelle Vref erforderlich, die an den invertierenden Eingang - des Operationsverstärkers angeschlossen ist. Dabei wird einfach die gewünschte Referenzspannung über einen mit der bereits vorhandenen zweiten Versorgungsspannung U2 verbundenen Spannungsteiler eingestellt.

Für die Dauer eines H-Zustandes ist der Phototransistor des ersten Optokopplers, wie zurvor, gegen Nullpotential durchgeschaltet, so daß aufgrund der am nichtinvertierenden Eingang + des Operationsverstärkers anliegenden Referenzspannung am Ausgang A ebenfalls ein H-Zustand sich einstellt.

Falls nun ein L-Zustand am Signaleingang D anliegt, ist die lichtemittierende Diode des ersten Optokopplers OK1 gesperrt und der konstante Strom der zweiten Konstantstromquelle I2 wird jetzt über die Umwegdiode UD zurückgeführt. Da jetzt auch der Phototransistor des ersten Optokopplers gesperrt ist, stellt sich am Ausgang A, für die Dauer eines L-Zustandes am Signaleingang D, ebenfalls ein L-Zustand ein.

Darüberhinaus ist es möglich, durch Vertauschen des ersten und des zweiten Ausganges A1, A2 der Schalteinheit SE, die am Signaleingang D anliegenden Signale invertiert am Ausgang A der Auswerteschaltung AWS zu erhalten.

**Patentansprüche**

1.  Schaltungsanordnung zum Übertragen von digitalen Signalen über eine symmetrische, zweiadrige Leitung (LT), die an einem Ende mit einer eine erste und eine zweite Stromquelle (I1, I2) enthaltenden Sendeeinheit (S) und an dem anderen Ende mit einer eine Auswerteschaltung (AWS) enthaltende Empfangseinheit (E) abgeschlossen ist,
    **dadurch gekennzeichnet,** daß die erste und zweite Stromquelle (I1, I2) der Sendeeinheit identisch aufgebaute Konstantstromquellen (I1, I2) sind, daß die erste Konstantstromquelle (I1) mit einem Abgriff (C1) einer ersten Ader (a) der Leitung (LT) und die zweite Konstantstromquelle (I2) mit einem Abgriff (C2) einer zweiten Ader (b) der Leitung (LT) verbunden ist, daß die Sendeeinheit (S) eine Schalteinheit (SE) enthält, deren erster Ausgang (A1) mit dem Abgriff (C1) der ersten Ader (a) und deren zweiter Ausgang (A2) mit dem Abgriff (C2) der zweiten Ader (b) verbunden sind, daß für die Dauer eines ersten logischen Zustandes des an einem Signaleingang (D) der Schalteinheit (SE) anliegenden zu übertragenden Signales durch die erste Konstantstromquelle (I1) und für die Dauer eines zweiten logischen Zustandes durch die zweite Konstantstromquelle (I2) ein Strom über die Leitung (LT) gesendet wird, daß die Empfangseinheit (E) zusätzlich einen ersten Optokoppler (OK1) und einen zweiten Optokoppler (OK2) aufweist, daß für die Dauer des ersten logischen Zustandes die Leitung (LT) mit der Primärseite des ersten Optokopplers (OK1) und für die Dauer des zweiten logischen Zustandes die Leitung (LT) mit der Primärseite des zweiten Optokopplers (OK2) abgeschlossen ist und daß die Sekundärseiten der Optokoppler (OK1, OK2) mit der Auswerteschaltung (AWS) verbunden sind, an deren Ausgang (A) die übertragenen digitalen Signale anliegen.

2.  Schaltungsanordnung nach Anspruch 1, dadurch gekennzeichnet, daß die Schalteinheit (SE) ein erstes Invertierglied (IN1), ein zweites Invertierglied (IN2) und ein in Reihe zum zweiten Invertierglied (IN2) geschaltetes drittes Invertierglied (IN3) enthält, daß der Signaleingang (D) parallel mit einem Eingang des ersten Invertiergliedes (IN1) und mit einem Eingang des zweiten Invertiergliedes (IN2) verbunden ist und daß ein Ausgang des ersten Invertiergliedes (IN1) mit dem zweiten Ausgang (A2) und ein Ausgang des dritten Invertiergliedes (IN3) mit dem ersten Ausgang (A1) der Schalteinheit (SE) verbunden sind.

3.  Schaltungsanordnung nach Anspruch 1, dadurch gekennzeichnet, daß in der Empfangseinheit (E) anstelle des zweiten Optokopplers (OK2) eine Umwegdiode (UD) antiparallel zur Primärseite des ersten Optokopplers (OK1) geschaltet ist und daß die Sekundärseite des ersten Optokopplers (OK1) an die mit einer Referenzspannungsquelle (Vref) verbundene Auswerteschaltung (AWS) angeschlossen ist.

**Claims**

1.  A circuit arrangement for transmitting digital signals over a balanced two-wire line (LT) terminated at one end With a transmitting unit (S) comprising a first and a second current source (I1, I2) and at the other end with a receiving unit (E) comprising an evaluating circuit (AWS),
    **characterized in** that the first and second current sources (I1, I2) of the transmitting unit are constant-current sources (I1, I2) of identical construction, that the first constant-current source (I1) is connected to a tap (C1) of a first wire (a) of the line (LT), and the second constant-current source (I2) to a tap (C2) of a second wire (b) of the line (LT), that the transmitting unit (S) includes a switching unit (SE) having its first output (A1) and second output (A2) connected to the tap (C1) of the first wire (a) and to the tap (C2) of the second dire (b), respectively, that a current is sent over the line (LT) by the first constant-current source (I1) for the duration of a first logic state of the signal to be transmitted, which is applied at a signal input (D) of the switching unit (SE), and by the second constant-current source (I2) for the duration of a second logic state of said signal, that the receiving unit (E) additionally includes a first optocoupler (OK1) and a second optocoupler (OK2), that the line (LT) is terminated with the primary side of the first optocoupler (OK1) for the duration of the first logic state and with the primary side of the second optocoupler (OK2) for the duration of the second logic state, and that the secondary sides of the optocouplers (OK1, OK2) are connected to the evaluating circuit (AWS), whose output (A) provides the transmitted digital signals.

2. A circuit arrangement as claimed in claim 1, characterized in that the switching unit (SE) comprises a first inverter (IN1), a second inverter (IN2), and a third inverter (IN3) in series with the second inverter (IN2), that the signal input (D) is connected to an input of the first inverter (IN1) and to an input of the second inverter (IN2) in parallel, and that an output of the first inverter (IN1) and an output of the second inverter (IN3) are connected to the second ouput (A2) and the first output (A1), respectively, of the switching unit (SE).

3. A circuit arrangement as claimed in claim 1, characterized in that the second optocoupler (OK2) in the receiving unit (E) is replaced by a diode (UD) connected in inverse parallel with the primary side of the first optocoupler (OK1), and that the secondary side of the first optocoupler (OK1) is coupled to the evaluating circuit (AWS), which is connected to a reference-voltage source (Vref).

**Revendications**

1. Disposition de circuit pour transmettre des signaux numériques par l'intermédiaire d'une ligne symétrique, à deux conducteurs (LT) qui se termine, à une première extrémité, par un organe d'émission (S) contenant une première et une seconde sources de courant (I1, I2) et, à l'autre extrémité, par un organe de réception (E) contenant un circuit de traitement (WS), disposition caractérisée par le fait que la première et la seconde sources de courant (I1, I2) de l'organe d'émission sont des sources d'intensité constante (I1, I2) de structure identique, par le fait que la première source d'intensité constante (I1) est reliée à une jonction (C1) d'un premier conducteur (a) de la ligne (LT) et la seconde source d'intensité constante (I2), à une jonction (C2) d'un second conducteur (b) de la ligne (LT), par le fait que l'organe d'émission (S) contient un organe de commutation (SE) dont la première sortie (A1) est reliée à la jonction (C1) du premier conducteur (a) et dont la seconde sortie (A2) l'est à la jonction (C2) du second conducteur (b), par le fait pendant la durée d'un premier état logique du signal à transmettre, qui apparait à une entrée du signal (D) de l'organe de commutation (SE), un courant est envoyé sur la ligne (LT) par la première source d'intensité constante (I1) et que pendant la durée d'un second état logique un courant est envoyé sur la ligne (LT) par la seconde source d'intensité constante (I2), par le fait que l'organe de réception (E) présente en outre un premier coupleur optique (OK1) et un second coupleur optique (OK2), par le fait que pendant la durée du premier état logique la ligne (LT) se termine par le côté primaire du premier coupleur optique (OK1) et que pendant la durée du second état logique la ligne (LT) se termine par le côté primaire du second coupleur optique (OK2) et par le fait que les côtés secondaires des coupleurs optiques (OK1, OK2) sont reliés avec le circuit de traitement (AWS) à la sortie (A) duquel apparaissent les signaux numériques transmis.

2. Disposition de circuit selon la revendication 1, caractérisée par le fait que l'organe de commutation (SE) contient un premier élément inverseur (IN1), un second élément inverseur (IN2) et un troisième élément inverseur (IN3) monté en série avec le second élément inverseur (IN2), par le fait que l'entrée du signal (D) est reliée en parallèle avec une entrée du premier élément inverseur (IN1) et avec une entrée du second élément inverseur (IN2) et par le fait qu'une sortie du premier élément inverseur (IN1) est reliée avec la seconde entrée (A2) de l'organe de commutation (SE) et qu'une sortie du troisième élément inverseur (IN3) est reliée avec la première sortie (A1) de l'organe de commutation (SE).

3. Disposition de circuit selon la revendication 1, caractérisée par le fait que dans l'organe de réception (E), à la place du second coupleur optique (OK2), une diode de déviation (UD) est montée en antiparallèle au côté primaire du premier coupleur optique (OK1) et par le fait que le côté secondaire du premier coupleur optique (OK1) est relié au circuit de traitement (AWS) lui-même relié à une source de tension de référence (Vref).

Fig.1

Fig.2